(19) Europäisches Patentamt
European Patent Office
Office européen des brevets

(11) EP 3 517 652 A1

(12) **EUROPEAN PATENT APPLICATION**
published in accordance with Art. 153(4) EPC

(43) Date of publication:
**31.07.2019 Bulletin 2019/31**

(21) Application number: **17852750.3**

(22) Date of filing: **23.08.2017**

(51) Int Cl.:
***C23F 1/02*** *(2006.01)* ***C23F 1/00*** *(2006.01)*
***H01G 11/70*** *(2013.01)* ***H01G 11/84*** *(2013.01)*
***H01M 4/66*** *(2006.01)*

(86) International application number:
**PCT/JP2017/030136**

(87) International publication number:
**WO 2018/055970 (29.03.2018 Gazette 2018/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.09.2016 JP 2016186689**
**26.09.2016 JP 2016187002**
**16.01.2017 JP 2017005038**
**16.01.2017 JP 2017005159**

(71) Applicant: **FUJIFILM Corporation**
**Tokyo 106-8620 (JP)**

(72) Inventor: **KAWAGUCHI Junji**
**Haibara-gun**
**Shizuoka 421-0396 (JP)**

(74) Representative: **Hoffmann Eitle**
**Patent- und Rechtsanwälte PartmbB**
**Arabellastraße 30**
**81925 München (DE)**

(54) **PERFORATED METAL FOIL PRODUCTION METHOD**

(57) An object of the invention is to provide a perforated metal foil manufacturing method enabling producing a metal foil having a plurality of fine through-holes by a simple method. A perforated metal foil manufacturing method includes in order: a resin layer forming step of forming, using a composition containing a plurality of metal particles and a polymer component, a resin layer in which the metal particles are partially embedded on one principal surface of a metal foil; a through-hole forming step of forming through-holes in the metal foil by dissolving the metal particles and a part of the metal foil by bringing the metal foil having the resin layer into contact with an etchant; and a resin layer removing step of removing the resin layer to produce a perforated metal foil having through-holes.

FIG. 1A

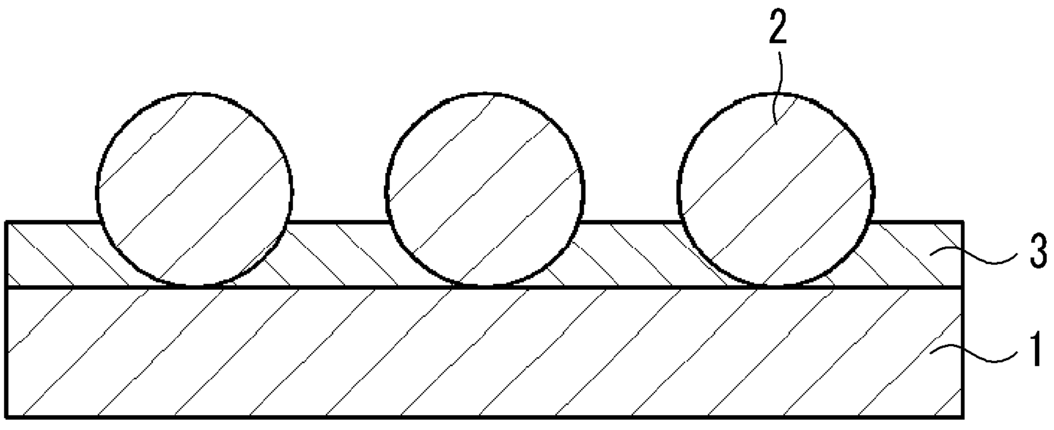


EP 3 517 652 A1

FIG. 1B

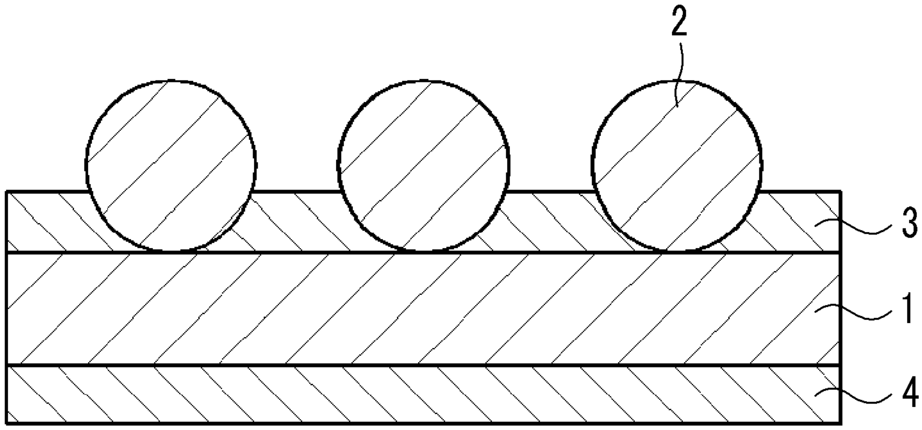


FIG. 1C

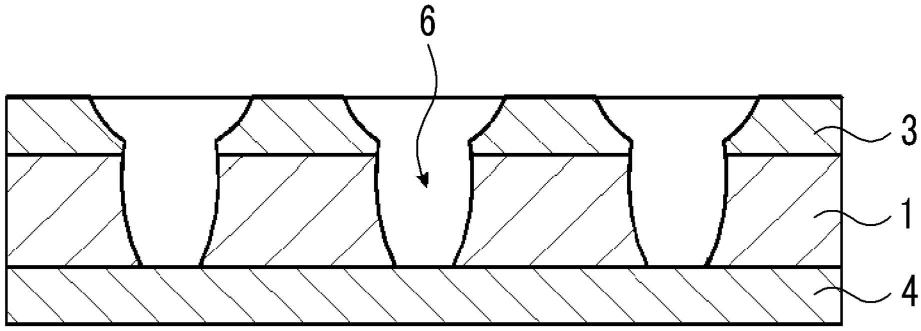


FIG. 1D

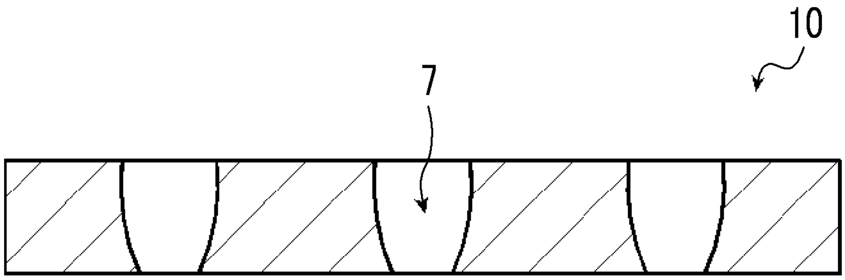

## Description

## BACKGROUND OF THE INVENTION

1. Field of the Invention

The present invention relates to a perforated metal foil manufacturing method.

2. Description of the Related Art

In recent years, with the development of portable devices such as personal computers and mobile phones, hybrid vehicles, electric vehicles, and the like, the demand for electric storage devices as a power source thereof, particularly, lithium ion capacitors, lithium ion secondary batteries, and electric double layered capacitors has increased.

It has been known that as a collector for an electrode (hereinafter, simply referred to as "collector") which is used for a positive electrode or a negative electrode of the electric storage device, a collector having a metal foil such as an aluminum foil or a copper foil in which a large number of fine through-holes are formed is used. In addition, it has been known that an active material such as activated carbon is applied to a surface of a collector made of the metal foil in which through-holes are formed, and the resulting material is used as a positive electrode or a negative electrode.

For example, a perforated collector formed of a metal foil provided with a large number of through-holes is described in JP1999-067217A (JP-H11-067217A) ([Claim 1]).

In addition, a method of manufacturing a perforated collector, including: applying a resist liquid formed of an ultraviolet-curable photosensitive resin to a surface of a non-porous metal foil to form a resist layer; performing irradiation on the resist layer through a positive film such that only places where a hole is to be formed are not irradiated with ultraviolet rays, and other places are irradiated with ultraviolet rays to be cured; removing the photosensitive resin at the uncured places by washing to form a perforated resist film on the surface of the non-porous metal foil; performing etching to form a large number of through-holes corresponding to the holes of the perforated resist film on the non-porous metal foil; and peeling the perforated resist film to produce a metal foil in which through-holes are formed is described in JP1999-067217A (JP-H11-067217A) ([0017] and [0018]).

As a method of forming through-holes, a forming method by mechanical processing such as punching has also been known.

However, the through-holes formed by punching or the like are holes having a diameter of larger than 300 μm in many cases, and thus in a case where an active material is applied to the metal foil, there are problems in that the active material falls off or the uniformity of the surface of the active material is impaired, and this method is not suitable as a method of forming through-holes in the collector.

## SUMMARY OF THE INVENTION

The inventors have conducted studies on the method of manufacturing a perforated collector described in JP1999-067217A (JP-H11-067217A), and found that the method in which a perforated resist film is formed by a photoresist and an etching treatment is performed as described above has many steps including resist application, drying, image formation (mask exposure, laser drawing, etc.), removal of a non-image area, and a washing step, and is complicated, and thus the production cost is increased.

An object of the invention to provide a perforated metal foil manufacturing method enabling producing a metal foil having a plurality of fine through-holes by a simple method.

The inventors have conducted intensive studies to solve the problems, and as a result, found that in a case where a resin layer is formed using a composition containing a plurality of metal particles or particles and a polymer component on a metal foil, and then the metal particles and a part of the metal foil is dissolved, or in a case where a resin layer is formed, particles are removed from the resin layer, and then a part of a metal foil is dissolved to form through-holes, a metal foil having a plurality of fine through-holes can be easily produced, and completed the invention.

That is, the inventors have found that the problems can be solved with the following configuration.

[1] A perforated metal foil manufacturing method comprising in order: a resin layer forming step of forming, using a composition containing a plurality of metal particles and a polymer component, a resin layer in which the metal particles are partially embedded on one principal surface of a metal foil; a through-hole forming step of forming through-holes in the metal foil by bringing the metal foil having the resin layer into contact with an etchant to dissolve the metal particles and a part of the metal foil; and a resin layer removing step of removing the resin layer to produce a perforated metal foil having through-holes.

[2] The perforated metal foil manufacturing method according to [1], in which in the resin layer forming step, the

resin layer is formed so as to satisfy Formula (1).

$$n_1<r_1 \ldots(1)$$

Here, in Formula (1), $n_1$ represents a thickness of the resin layer to be formed, $r_1$ represents an average particle diameter of the metal particles which are contained in the composition, and each of units of $n_1$ and $r_1$ is μm.

[3] The perforated metal foil manufacturing method according to [1] or [2], in which the metal foil and the metal particles contain the same metal atom.

[4] A perforated metal foil manufacturing method comprising in order: a resin layer forming step of forming, using a composition containing a plurality of particles and a polymer component, a resin layer in which the particles are at least partially embedded on one principal surface of a metal foil; a particle removing step of removing the particles from the resin layer; a through-hole forming step of forming through-holes in the metal foil by bringing the metal foil having the resin layer into contact with an etchant; and a resin layer removing step of removing the resin layer to produce a perforated metal foil having through-holes.

[5] The perforated metal foil manufacturing method according to [4], in which in the resin layer forming step, the resin layer is formed so as to satisfy Formula (2).

$$n_2<r_2/2 \ldots(2)$$

Here, in Formula (2), $n_2$ represents a thickness of the resin layer to be formed, $r_2$ represents an average particle diameter of the particles which are contained in the composition, and each of units of $n_2$ and $r_2$ is μm.

[6] The perforated metal foil manufacturing method according to [4] or [5], in which in the particle removing step, the particles are removed by rubbing the surface of the resin layer in which the particles are at least partially embedded while the surface of the resin layer is immersed in a solvent.

[7] The perforated metal foil manufacturing method according to any one of [1] to [6], in which in the resin layer forming step, the resin layer is formed by applying the composition.

[8] The perforated metal foil manufacturing method according to any one of [1] to [7], in which the polymer component which is contained in the composition is a resin material selected from the group consisting of phenolic resins, acrylic resins, and polyimide-based resins.

[9] The perforated metal foil manufacturing method according to any one of [1] to [8], in which the resin layer which is formed by the resin layer forming step has a thickness of 0.5 to 4 μm.

[10] The perforated metal foil manufacturing method according to any one of [1] to [9], in which the metal particles or the particles which are contained in the composition have an average particle diameter of 1 to 10 μm.

[11] The perforated metal foil manufacturing method according to any one of [1] to [10], in which a specific gravity of the metal particles or the particles which are contained in the composition is greater than a specific gravity of the polymer component which is contained in the composition.

[12] The perforated metal foil manufacturing method according to [11], in which the specific gravity of the metal particles or the particles which are contained in the composition is 1.5 or greater, and the specific gravity of the polymer component which is contained in the composition is 0.9 or greater and less than 1.5.

[13] The perforated metal foil manufacturing method according to any one of [1] to [12], in which the metal foil is a foil selected from the group consisting of aluminum foil, copper foil, silver foil, gold foil, platinum foil, stainless steel foil, titanium foil, tantalum foil, molybdenum foil, niobium foil, zirconium foil, tungsten foil, beryllium copper foil, phosphor bronze foil, brass foil, nickel silver foil, tin foil, lead foil, zinc foil, solder foil, iron foil, nickel foil, Permalloy foil, nichrome foil, 42 alloy foil, Kovar foil, Monel foil, Inconel foil, and Hastelloy foil, or a foil formed by laminating a foil selected from the group and a metal of a different type from the selected foil.

[14] The perforated metal foil manufacturing method according to any one of [1] to [13], further comprising: a protective layer forming step of forming a protective layer, using a composition containing a polymer component, on a principal surface of the metal foil opposite to the surface on which the resin layer is formed before the through-hole forming step, in which in the resin layer removing step, the resin layer and the protective layer are removed to produce a perforated metal foil having through-holes.

According to the invention, it is possible to provide a perforated metal foil manufacturing method enabling producing a metal foil having a plurality of fine through-holes by a simple method as will be described below.

## BRIEF DESCRIPTION OF THE DRAWINGS

Fig. 1A is a schematic cross-sectional view showing a state in which a resin layer in which metal particles are partially embedded is formed on one principal surface of a metal foil by a resin layer forming step, of schematic cross-sectional views for illustrating an example of a perforated metal foil manufacturing method according to a first embodiment of the invention.

Fig. 1B is a schematic cross-sectional view showing a state in which a protective layer is formed on a principal surface opposite to the surface on which the resin layer is formed by an optional protective layer forming step, of the schematic cross-sectional views for illustrating an example of the perforated metal foil manufacturing method according to the first embodiment of the invention.

Fig. 1C is a schematic cross-sectional view showing a state in which through-holes are formed in the resin layer and the metal foil by a through-hole forming step, of the schematic cross-sectional views for illustrating an example of the perforated metal foil manufacturing method according to the first embodiment of the invention.

Fig. 1D is a schematic cross-sectional view showing a perforated metal foil produced by removing the resin layer by a resin layer removing step, of the schematic cross-sectional views for illustrating an example of the perforated metal foil manufacturing method according to the first embodiment of the invention.

Fig. 2A is a schematic cross-sectional view showing a state in which a resin layer in which particles are partially embedded is formed on one principal surface of a metal foil by a resin layer forming step, of schematic cross-sectional views for illustrating an example of a perforated metal foil manufacturing method according to a second embodiment of the invention.

Fig. 2B is a schematic cross-sectional view showing a state in which a protective layer is formed on a principal surface opposite to the surface on which the resin layer is formed by an optional protective layer forming step, of the schematic cross-sectional views for illustrating an example of the perforated metal foil manufacturing method according to the second embodiment of the invention.

Fig. 2C is a schematic cross-sectional view showing a state in which the particles are removed from the resin layer on the metal foil by a particle removing step, of the schematic cross-sectional views for illustrating an example of the perforated metal foil manufacturing method according to the second embodiment of the invention.

Fig. 2D is a schematic cross-sectional view showing a state in which through-holes are formed in the resin layer and the metal foil by a through-hole forming step, of the schematic cross-sectional views for illustrating an example of the perforated metal foil manufacturing method according to the second embodiment of the invention.

Fig. 2E is a schematic cross-sectional view showing a perforated metal foil produced by removing the resin layer by a resin layer removing step, of the schematic cross-sectional views for illustrating an example of the perforated metal foil manufacturing method according to the second embodiment of the invention.

## DESCRIPTION OF THE PREFERRED EMBODIMENTS

Hereinafter, the invention will be described in detail.

The following descriptions of constitutional requirements are given based on representative embodiments of the invention, but the invention is not limited to the embodiments.

In this specification, a numerical value range expressed using the expression "to" means a range including numerical values before and after "to" as a lower limit value and an upper limit value.

A perforated metal foil manufacturing method according to a first embodiment of the invention (hereinafter, also simply abbreviated as "manufacturing method according to the embodiment of the invention") has a resin layer forming step of forming, using a composition containing a plurality of metal particles and a polymer component, a resin layer in which the metal particles are partially embedded on one principal surface of a metal foil.

The manufacturing method according to the embodiment of the invention further has a through-hole forming step of forming through-holes in the metal foil by dissolving the metal particles and a part of the metal foil by bringing the metal foil having the resin layer into contact with an etchant after the resin layer forming step.

The manufacturing method according to the embodiment of the invention further has a resin layer removing step of removing the resin layer to produce a perforated metal foil having through-holes after the through-hole forming step.

The manufacturing method according to the embodiment of the invention preferably further has a protective layer forming step of forming, using a composition containing a polymer component, a protective layer on a principal surface of the metal foil opposite to the surface on which the resin layer is formed before the through-hole forming step.

In the first embodiment of the invention, the through-hole forming step of forming through-holes by dissolving the metal particles and a part of the metal foil is performed after the resin layer forming step, and then the resin layer is removed. Accordingly, it is possible to easily produce a metal foil having a plurality of fine through-holes.

Although the detailed reason for this is not clear, the inventors have presumed that this is due to the following reason.

That is, it is thought that by providing the resin layer forming step and the through-hole forming step, the metal foil is dissolved together with the metal particles in a thickness direction at positions corresponding to the portions where the metal particles are embedded, and through-holes are formed as shown in Figs. 1A and 1B to be described later, whereby it is possible to easily produce a metal foil having a plurality of fine through-holes.

Next, the steps in the manufacturing method according to the first embodiment of the invention will be briefly described using Figs. 1A to 1D. The respective processing steps of the manufacturing method according to the first embodiment of the invention will be described in detail later.

In the manufacturing method according to the first embodiment of the invention, by a resin layer forming step using a composition containing a plurality of metal particles and a polymer component, a resin layer 3 in which a plurality of metal particles 2 are partially embedded is formed on one principal surface of a metal foil 1 as shown in Fig. 1A.

In the manufacturing method according to the first embodiment of the invention, a protective layer 4 is preferably formed on a principal surface of the metal foil 1 opposite to the surface on which the resin layer 3 is formed as shown in Fig. 1B by an optional protective layer forming step using a composition containing a polymer component.

In the manufacturing method according to the first embodiment of the invention, through-holes 6 are formed in the resin layer 3 and the metal foil 1 as shown in Fig. 1C by a through-hole forming step of dissolving the metal particles and a part of the metal foil by bringing the metal foil having the resin layer into contact with an etchant.

In the manufacturing method according to the first embodiment of the invention, a perforated metal foil 10 having a plurality of through-holes 7 is formed as shown in Fig. 1D by a resin layer removing step of removing the resin layer. In a case where the protective layer forming step is provided, the resin layer and the protective layer are removed by the resin layer removing step as shown in Fig. ID, and thus the perforated metal foil 10 having a plurality of through-holes 7 is formed.

A manufacturing method according to a second embodiment of the invention has a resin layer forming step of forming, using a composition containing a plurality of particles and a polymer component, a resin layer in which particles are at least partially embedded on one principal surface of a metal foil.

The manufacturing method according to the second embodiment of the invention further has a particle removing step of removing the particles from the resin layer after the resin layer forming step.

The manufacturing method according to the second embodiment of the invention further has a through-hole forming step of forming through-holes in the metal foil by bringing the metal foil having the resin layer into contact with an etchant after the particle removing step.

The manufacturing method according to the second embodiment of the invention further has a resin layer removing step of removing the resin layer to produce a perforated metal foil having through-holes after the through-hole forming step.

The manufacturing method according to the second embodiment of the invention preferably further has a protective layer forming step of forming, using a composition containing a polymer component, a protective layer on a principal surface of the metal foil opposite to the surface on which the resin layer is formed before the through-hole forming step.

In the second embodiment of the invention, the through-holes are formed after the resin layer forming step and the particle removing step, and the resin layer is removed. Accordingly, it is possible to easily produce a metal foil having a plurality of fine through-holes.

Although the detailed reason for this is not clear, the inventors have presumed that this is due to the following reason.

That is, it is thought that through the resin layer forming step and the particle removing step, a resin layer in which recesses are formed in portions where the particles were embedded is obtained as shown in Fig. 2C to be described later, and through-holes are formed starting from the recesses of the resin layer in the subsequent through-hole forming step, whereby it is possible to easily produce a metal foil having a plurality of fine through-holes. In addition, the inventors have thought that the reason why through-holes are formed starting from the recesses of the resin layer is that in the deepest portion of the recess, a very thin resin layer remains or there is a portion where the metal foil is exposed, and thus the etchant more preferentially enters from the recesses than other portions, and the through-holes are formed in the metal foil.

Next, the steps in the manufacturing method according to the second embodiment of the invention will be briefly described using Figs. 2A to 2E. The respective processing steps of the manufacturing method according to the second embodiment of the invention will be described in detail later.

In the manufacturing method according to the second embodiment of the invention, by a resin layer forming step using a composition containing a plurality of particles and a polymer component, a resin layer 3 in which a plurality of particles 2 are at least partially embedded is formed on one principal surface of a metal foil 1 as shown in Fig. 2A.

In the manufacturing method according to the second embodiment of the invention, a protective layer 4 is

preferably formed on a principal surface of the metal foil 1 opposite to the surface on which the resin layer 3 is formed as shown in Fig. 2B by an optional protective layer forming step using a composition containing a polymer component.

In the manufacturing method according to the second embodiment of the invention, the particles 2 are removed from the resin layer 3 as shown in Fig. 2C by a particle removing step of removing the particles from the resin layer, and thus a resin layer 3 in which recesses 5 corresponding to the portions where the particles 2 were embedded are formed is formed.

In the manufacturing method according to the second embodiment of the invention, through-holes 6 are formed in the resin layer 3 and the metal foil 1 as shown in Fig. 2D by a through-hole forming step of bringing the metal foil having the resin layer into contact with an etchant.

In the manufacturing method according to the second embodiment of the invention, as shown in Fig. 2E, a perforated metal foil 10 having a plurality of through-holes 7 is formed by a resin layer removing step of removing the resin layer. In a case where the protective layer forming step is provided, the resin layer and the protective layer are removed by the resin layer removing step as shown in Fig. 2E, and thus the perforated metal foil 10 having a plurality of through-holes 7 is formed.

[Resin Layer Forming Step]

In the resin layer forming step of the manufacturing method according to the first embodiment of the invention, using a composition containing a plurality of metal particles and a polymer component, a resin layer in which the metal particles are partially embedded is formed on one principal surface of a metal foil.

In the resin layer forming step of the manufacturing method according to the second embodiment of the invention, using a composition containing a plurality of particles and a polymer component, a resin layer in which at least the particles are partially embedded is formed on one principal surface of a metal foil.

The resin layer forming step of the manufacturing method according to the second embodiment of the invention is the same as the resin layer forming step in the first embodiment, except that the particles contained in the composition may be particles other than metal particles. Therefore, the description will be collectively given as follows, except for the differences between the resin layer forming step of the first embodiment and the resin layer forming step of the second embodiment.

[Metal Foil]

The metal foil which is used in the resin layer forming step is not particularly limited as long as it is a metal foil containing a metal atom which dissolves in an etchant which is used in the through-hole forming step to be described later. It is preferably a foil made of a metal and/or a metal compound, and more preferably a foil made of a metal.

Specific examples of the metal foil include aluminum foil, copper foil, silver foil, gold foil, platinum foil, stainless steel foil, titanium foil, tantalum foil, molybdenum foil, niobium foil, zirconium foil, tungsten foil, beryllium copper foil, phosphor bronze foil, brass foil, nickel silver foil, tin foil, lead foil, zinc foil, solder foil, iron foil, nickel foil, Permalloy foil, nichrome foil, 42 alloy foil, Kovar foil, Monel foil, Inconel foil, and Hastelloy foil.

The metal foil may be a laminate of two or more different metals including the above types of metals.

The metal foil lamination method is not particularly limited, and plating or a clad material is preferably used. The metal which is used for plating is not particularly limited as long as it is a metal containing a metal atom which dissolves in an etchant, and it is preferably a metal. Examples of the plating species include nickel, chromium, cobalt, iron, zinc, tin, copper, silver, gold, platinum, palladium, and aluminum.

The plating method is not particularly limited, and any of electroless plating, electrolytic plating, hot dip plating, a chemical conversion treatment, and the like is used.

The metal which is used to form a clad material for the metal foil is not particularly limited as long as it is a metal containing a metal atom which dissolves in an etchant, and it is preferably a metal. Examples of the metal species include the metals which are used for the metal foil.

The thickness of the metal foil is preferably 10 μm to 100 μm, and more preferably 10 μm to 40 μm.

Here, the average thickness of the metal foil refers to the average of the thicknesses measured at any five points using a contact film thickness meter (digital electronic micrometer).

[Composition]

The composition which is used in the resin layer forming step contains at least a plurality of metal particles and a polymer component.

<Metal Particles>

In the first embodiment, the metal particles contained in the composition are not particularly limited as long as these are particles containing a metal atom which dissolves in an etchant which is used in the through-hole forming step to be described later. The metal particles are preferably particles made of a metal and/or a metal compound, and more preferably particles made of a metal.
Specific examples of the metal constituting the metal particles include aluminum, nickel, iron, copper, stainless steel, titanium, tantalum, molybdenum, niobium, zirconium, tungsten, beryllium, and alloys thereof. These may be used alone or in combination of two or more thereof.
Among these, aluminum, nickel, and copper are preferable, and aluminum and copper are more preferable.
Examples of the metal compound constituting the metal particles include oxides, complex oxides, hydroxides, carbonates, sulfates, silicates, phosphates, nitrides, carbides, sulfides, and composite materials of at least two or more types thereof. Specific examples thereof include copper oxide, aluminum oxide, aluminum nitride, and aluminum borate.
In the invention, it is preferable that the metal particles and the above-described metal foil contain the same metal atom from the viewpoint of recovering the etchant which is used in the through-hole removing step to be described later and recycling the dissolved metal.
The shape of the metal particles is not particularly limited. The shape is preferably a spherical shape, and more preferably closer to a true spherical shape.
The average particle diameter of the metal particles is preferably 1 to 10 $\mu$m, and more preferably greater than 2 $\mu$m and not greater than 6 $\mu$m from the viewpoint of dispersibility in the composition.
Here, the average particle diameter of the metal particles refers to the cumulative 50% diameter of the particle size distribution measured by a laser diffraction/scattering type particle diameter measuring device (MICROTRAC MT3000 manufactured by Nikkiso Co., Ltd.).
The content of the metal particles is preferably 0.05 to 95 mass%, more preferably 1 to 50 mass%, and even more preferably 3 to 25 mass% with respect to the total solid content contained in the composition.

<Particles>

In the second embodiment, the particles contained in the composition are not particularly limited. From the viewpoint of easiness of removal in the particle removing step to be described later, the material of the particles is preferably an inorganic filler or an inorganic-organic composite filler.
Examples of the inorganic filler include metals and metal compounds, and examples of the metal compounds include oxides, complex oxides, hydroxides, carbonates, sulfates, silicates, phosphates, nitrides, carbides, sulfides, and composite materials of at least two or more types thereof.
Specific examples thereof include glass, zinc oxide, silica, alumina, zirconium oxide, tin oxide, potassium titanate, strontium titanate, aluminum borate, magnesium oxide, magnesium borate, aluminum hydroxide, magnesium hydroxide, calcium hydroxide, titanium hydroxide, basic magnesium sulfate, calcium carbonate, magnesium carbonate, calcium sulfate, magnesium sulfate, calcium silicate, magnesium silicate, calcium phosphate, silicon nitride, titanium nitride, aluminum nitride, silicon carbide, titanium carbide, zinc sulfide, and composite materials of at least two or more types thereof.
Among these, glass, silica, alumina, potassium titanate, strontium titanate, aluminum borate, magnesium oxide, calcium carbonate, magnesium carbonate, calcium silicate, magnesium silicate, calcium phosphate, and calcium sulfate are preferable.
Examples of the inorganic-organic composite filler include a composite material obtained by coating the surfaces of particles such as synthetic resin particles or natural polymer particles with the above-described inorganic filler.
Specific examples of the synthetic resin particles include particles of resins such as acrylic resins, polyethylene, polypropylene, polyethylene oxide, polypropylene oxide, polyethylene imine, polystyrene, polyurethane, polyurea, polyester, polyamide, polyimide, carboxymethyl cellulose, gelatin, starch, chitin, and chitosan.
Among these, particles of resins such as acrylic resins, polyethylene, polypropylene, and polystyrene are preferable.
The shape of the particles is not particularly limited. The shape is preferably a spherical shape, and more preferably closer to a true spherical shape.
The average particle diameter of the particles is preferably 1 to 10 $\mu$m, and more preferably greater than 2 $\mu$m and not greater than 6 $\mu$m from the viewpoint of dispersibility in the composition and removal in the particle removing step to be described later.
Here, the average particle diameter of the particles refers to the cumulative 50% diameter of the particle size distribution measured by a laser diffraction/scattering type particle diameter measuring device (MICROTRAC MT3000 manufactured by Nikkiso Co., Ltd.).

The content of the particles is preferably 0.05 to 95 mass%, more preferably 1 to 50 mass%, and even more preferably 3 to 25 mass% with respect to the total solid content contained in the composition.

<Polymer component>

The polymer component contained in the composition is not particularly limited, and a conventionally known polymer component can be used.

Specific examples of the polymer component include epoxy-based resins, silicone-based resins, acrylic resins, urethane-based resins, ester-based resins, urethane acrylate-based resins, silicone acrylate-based resins, epoxy acrylate-based resins, ester acrylate-based resins, polyamide-based resins, polyimide-based resins, polycarbonate-based resins, and phenolic resins. These may be used alone or in combination of two or more types thereof.

Among these, the polymer component is preferably a resin material selected from the group consisting of phenolic resins, acrylic resins, and polyimide-based resins since the above resins have excellent acid resistance, and thus desired through-holes are easily obtained even in a case where an acidic solution is used as an etchant which is used in the through-hole forming step to be described later.

In the invention, from the viewpoint of easiness of removal in the resin layer removing step to be described later, the polymer component contained in the composition is preferably a water insoluble and alkaline water soluble polymer (hereinafter, also abbreviated as "alkaline water soluble polymer"), that is, a homopolymer containing an acidic group in a main chain or a side chain of the polymer, a copolymer thereof, or a mixture thereof.

As the alkaline water soluble polymer, those having an acidic group in a main chain and/or a side chain of the polymer are preferable from the viewpoint of further facilitating removal in the resin layer removing step to be described later.

Specific examples of the acidic group include a phenolic group (-Ar-OH), a sulfonamide group ($-SO_2NH-R$), a substituted sulfonamide-based acid group (hereinafter, referred to as "active imide group") [$-SO_2NHCOR$, $-SO_2NHSO_2R$, $-CONHSO_2R$], a carboxyl group ($-CO_2H$), a sulfo group ($-SO_3H$), and a phosphonic group ($-OPO_3H_2$).

Ar represents a divalent aryl linking group which may have a substituent, and R represents a hydrocarbon group which may have a substituent.

Among the alkaline water soluble polymers having an acidic group, alkaline water soluble polymers having a phenolic group, a carboxyl group, a sulfonamide group, or an active imide group are preferable. Particularly, alkaline water soluble polymers having a phenolic group or a carboxyl group are most preferable from the viewpoint of the balance between the hardness of the resin layer to be formed and the removability in the resin layer removing step to be described later.

Examples of the alkaline water soluble polymer having an acidic group are as follows.

Examples of the alkaline water soluble polymer having a phenolic group include novolak resins manufactured from one or more types of phenols such as phenol, o-cresol, m-cresol, p-cresol, and xylenol and aldehydes such as formaldehyde and paraformaldehyde, and polycondensates of pyrogallol and acetone. Copolymers obtained by copolymerization of a compound having a phenolic group can also be included. Examples of the compound having a phenolic group include acrylamide, methacrylamide, acrylic acid ester, methacrylic acid ester, and hydroxystyrene having a phenolic group.

Specific examples thereof include N-(2-hydroxyphenyl)acrylamide, N-(3-hydroxyphenyl)acrylamide, N-(4-hydroxyphenyl)acrylamide, N-(2-hydroxyphenyl)methacrylamide, N-(3-hydroxyphenyl)methacrylamide, N-(4-hydroxyphenyl)methacrylamide, o-hydroxyphenyl acrylate, m-hydroxyphenyl acrylate, p-hydroxyphenyl acrylate, o-hydroxyphenyl methacrylate, m-hydroxyphenyl methacrylate, p-hydroxyphenyl methacrylate, o-hydroxystyrene, m-hydroxystyrene, p-hydroxystyrene, 2-(2-hydroxyphenyl)ethyl acrylate, 2-(3-hydroxyphenyl)ethyl acrylate, 2-(4-hydroxyphenyl)ethyl acrylate, 2-(2-hydroxyphenyl)ethyl methacrylate, 2-(3-hydroxyphenyl)ethyl methacrylate, and 2-(4-hydroxyphenyl)ethyl methacrylate.

Among these, novolak resins or copolymers of hydroxystyrene are preferable. Examples of commercially available products of the copolymers of hydroxystyrene include MARUKALINKER M H-2, MARUKALINKER M S-4, MARUKALINKER M S-2, MARKA LINKER M S-1, all manufactured by MARUZEN PETROCHEMICAL CO., LTD., and VP-8000 and VP-15000, all manufactured by NIPPON SODA CO., LTD.

Examples of the alkaline water soluble polymer having a sulfonamide group include polymers including, as a main constitutional component, a minimum constitutional unit derived from a compound having a sulfonamide group. Examples of the compound include compounds having at least one sulfonamide group in which at least one hydrogen atom is bonded to a nitrogen atom and at least one polymerizable unsaturated group in the molecule. Among these, low-molecular-weight compounds having an acryloyl group, allyl group, or vinyloxy group and a substituted or monosubstituted aminosulfonyl group or substituted sulfonylimino group in the molecule are preferable.

Particularly, m-aminosulfonyl phenyl methacrylate, N-(p-aminosulfonylphenyl)methacrylamide, N-(p-aminosulfonylphenyl)acrylamide, or the like can be preferably used.

Examples of the alkaline water soluble polymer having an active imide group include polymers including, as a main constitutional component, a minimum constitutional unit derived from a compound having an active imide group. Examples of the compound include compounds having at least one active imide group represented by the following structural formula and at least one polymerizable unsaturated group in the molecule.

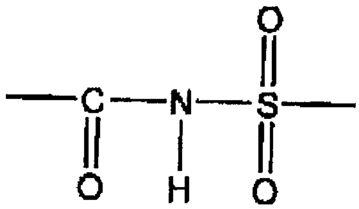

Specifically, N-(p-toluenesulfonyl)methacrylamide, N-(p-toluenesulfonyl)acrylamide, or the like can be preferably used.

Examples of the alkaline water soluble polymer having a carboxyl group include polymers including, as a main constitutional component, a minimum constitutional unit derived from a compound having at least one carboxyl group and at least one polymerizable unsaturated group in the molecule. Specific examples thereof include polymers using an unsaturated carboxylic acid compound such as acrylic acid, methacrylic acid, maleic acid anhydride, or itaconic acid.

Examples of the alkali soluble polymer having a sulfo group include polymers including, as a main constitutional component, a minimum constitutional unit derived from a compound having at least one sulfo group and at least one polymerizable unsaturated group in the molecule.

Examples of the alkaline water soluble polymer having a phosphonic group include polymers including, as a main constitutional component, a minimum constitutional unit derived from a compound having at least one phosphonic group and at least one polymerizable unsaturated group in the molecule.

It is not necessary for the alkaline water soluble polymer to have only one type of minimum constitutional unit having an acidic group. Two or more types of minimum constitutional units having the same acidic group, or those obtained by copolymerizing two or more types of minimum constitutional units having different acidic groups can be used.

As a copolymerization method, a graft copolymerization method, a block copolymerization method, or a random copolymerization method, which have been known, can be used.

In the copolymer, a compound having an acidic group to be copolymerized is preferably contained in an amount of 10 mol% or greater, and more preferably 20 mol% or greater.

In the invention, in a case where a copolymer is formed by copolymerization of a compound, other compounds containing no acidic group can also be used as the compound. Examples of other compounds containing no acidic group include compounds of the following (m1) to (m11).

(m1) Acrylic acid esters and methacrylic acid esters having an aliphatic hydroxyl group such as 2-hydroxyethyl acrylate or 2-hydroxyethyl methacrylate
(m2) Alkyl acrylates such as methyl acrylate, ethyl acrylate, propyl acrylate, butyl acrylate, amyl acrylate, hexyl acrylate, octyl acrylate, benzyl acrylate, 2-chloroethyl acrylate, glycidyl acrylate, and N-dimethylaminoethyl acrylate
(m3) Alkyl methacrylates such as methyl methacrylate, ethyl methacrylate, propyl methacrylate, butyl methacrylate, amyl methacrylate, hexyl methacrylate, cyclohexyl methacrylate, benzyl methacrylate, 2-chloroethyl methacrylate, glycidyl methacrylate, and N-dimethylaminoethyl methacrylate
(m4) Acrylamides or methacrylamides such as acrylamide, methacrylamide, N-methylolacrylamide, N-ethylacrylamide, N-hexylmethacrylamide, N-cyclohexylacrylamide, N-hydroxyethylacrylamide, N-phenylacrylamide, N-nitrophenylacrylamide, and N-ethyl-N-phenylacrylamide
(m5) Vinyl ethers such as ethyl vinyl ether, 2-chloroethyl vinyl ether, hydroxyethyl vinyl ether, propyl vinyl ether, butyl vinyl ether, octyl vinyl ether, and phenyl vinyl ether
(m6) Vinyl esters such as vinyl acetate, vinyl chloroacetate, vinyl butyrate, and vinyl benzoate
(m7) Styrenes such as styrene, $\alpha$-methylstyrene, methylstyrene, and chloromethylstyrene
(m8) Vinyl ketones such as methyl vinyl ketone, ethyl vinyl ketone, propyl vinyl ketone, and phenyl vinyl ketone
(m9) Olefins such as ethylene, propylene, isobutylene, butadiene, and isoprene
(m10) N-vinyl pyrrolidone, N-vinyl carbazole, 4-vinyl pyridine, acrylonitrile, and methacrylonitrile
(m11) Unsaturated imides such as maleimide, N-acryloylacrylamide, N-acetylmethacrylamide, N-propionylmethacrylamide, and N-(p-chlorobenzoyl)methacrylamide

The polymer component preferably has a weight-average molecular weight of $1.0\times10^3$ to $2.0\times10^5$ and a number-average molecular weight of $5.0\times10^2$ to $1.0\times10^5$, regardless of the fact that the polymer component is either

a homopolymer or a copolymer. In addition, the polymer component preferably has a polydispersity (weight-average molecular weight/number-average molecular weight) of 1.1 to 10.

In a case where a copolymer is used as the polymer component, the mixing ratio by weight of a minimum constitutional unit constituting a main chain and/or a side chain of the copolymer and derived from a compound having an acidic group to another minimum constitutional unit constituting a part of the main chain and/or a side chain and containing no acidic group is preferably within a range of 50:50 to 5:95, and more preferably 40:60 to 10:90.

Regarding the above-described polymer component, only one type may be used, or two or more types may be used in combination. The polymer component is preferably used within a range of 30 to 99 mass%, more preferably 40 to 95 mass%, and particularly preferably 50 to 90 mass% with respect to the total solid content contained in the composition.

In the first embodiment, regarding the metal particles and the polymer component described above, the specific gravity of the metal particles is preferably greater than the specific gravity of the polymer component since forming through-holes becomes easier in the through-hole forming step to be described later. Specifically, it is more preferable that the specific gravity of the metal particles is 1.5 or greater, and the specific gravity of the polymer component is 0.9 or greater and less than 1.5.

In the second embodiment, regarding the particles and the polymer component described above, the specific gravity of the particles is preferably greater than the specific gravity of the polymer component since forming through-holes becomes easier in the through-hole forming step to be described later, in other words, the surface of the metal foil is likely to be exposed to the deepest portion of the recess as the starting point of the through-hole in the resin layer. Specifically, it is more preferable that the specific gravity of the particles is 1.5 or greater, and the specific gravity of the polymer component is 0.9 or greater and less than 1.5.

<Surfactant>

From the viewpoint of coatability, a nonionic surfactant described in JP1987-251740A (JP-S62-251740A) or JP1991-208514A (JP-H3-208514A), or an amphoteric surfactant described in JP1984-121044A (JP-S59-121044A) or JP1992-013149A (JP-H4-013149A) can be added to the composition.

Specific examples of the nonionic surfactant include sorbitan tristearate, sorbitan monopalmitate, sorbitan trioleate, stearic acid monoglyceride, and polyoxyethylene nonyl phenyl ether.

Specific examples of the amphoteric surfactant include alkyl di(aminoethyl)glycine, alkylpolyaminoethylglycine hydrochloride, 2-alkyl-N-carboxyethyl-N-hydroxyethyl imidazolinium betaine, and an N-tetradecyl-N,N-betaine type (for example, trade name: AMORGEN K, manufactured by DAIICHI KOGYO Co., Ltd.).

In a case where the surfactant is contained, the content thereof is preferably 0.01 to 10 mass%, and more preferably 0.05 to 5 mass% with respect to the total solid content contained in the composition.

<Solvent>

A solvent can be added to the composition from the viewpoint of workability in forming the resin layer.

Specific examples of the solvent include ethylene dichloride, cyclohexanone, methyl ethyl ketone, methanol, ethanol, propanol, ethylene glycol monomethyl ether, 1-methoxy-2-propanol, 2-methoxyethyl acetate, 1-methoxy-2-propyl acetate, dimethoxyethane, methyl lactate, ethyl lactate, N,N-dimethylacetamide, N,N-dimethylformamide, tetramethylurea, N-methylpyrrolidone, dimethylsulfoxide, sulfolane, γ-butyrolactone, toluene, and water. These may be used alone or in combination of two or more thereof.

<Forming Method>

The method of forming a resin layer using the above-described composition is not particularly limited, and a method of forming a resin layer by applying the composition to a metal foil is preferable.

The method for application to a metal foil is not particularly limited, and for example, a bar coating method, a slit coating method, an ink jet method, a spray method, a roll coating method, a spin coating method, a cast coating method, a slit and spin method, a transfer method, or the like can be used.

In the first embodiment, the resin layer is preferably formed so as to satisfy Formula (1) since forming through-holes becomes easier in the through-hole forming step to be described later.

$$n_1 < r_1 \ldots (1)$$

Here, in Formula (1), $n_1$ represents the thickness of the resin layer to be formed, $r_1$ represents the average particle diameter of the metal particles which are contained in the composition, and each of the units of $n_1$ and $r_1$ is $\mu$m.

In the second embodiment, the resin layer is preferably formed so as to satisfy Formula (2) since forming through-holes becomes easier in the through-hole forming step to be described later.

$$n_2 < r_2/2 \quad \ldots(2)$$

Here, in Formula (2), $n_2$ represents the thickness of the resin layer to be formed, $r_2$ represents the average particle diameter of the particles which are contained in the composition, and each of the units of $n_2$ and $r_2$ is $\mu$m.

In the invention, from the viewpoints of resistance to an etchant which is used in the through-hole forming step to be described later and workability in the resin layer removing step to be described later, the thickness of the resin layer to be formed through the resin layer forming step is preferably 0.5 to 4 $\mu$m, and more preferably 1 $\mu$m or greater and 2 $\mu$m or less.

Here, the average thickness of the resin layer refers to the average of the thicknesses measured at any five points in a case where the resin layer is cut using a microtome and a cross section thereof is observed by an electron microscope.

[Protective Layer Forming Step]

In the first embodiment and the second embodiment of the manufacturing method of the invention, a protective layer forming step of forming a protective layer, using a composition containing a polymer component, on a principal surface of the metal foil opposite to the surface on which the resin layer is formed is preferably provided before the through-hole forming step from the viewpoint of workability in the through-hole forming step to be described later.

Here, examples of the polymer component are the same as the examples of the polymer component contained in the composition which is used in the above-described resin layer forming step. That is, the protective layer which is formed in an optional protective layer forming step is the same as the above-described resin layer, except that the above-described metal particles or particles are not embedded. In addition, regarding a method of forming the protective layer, the protective layer can be formed in the same manner as in the case of the above-described resin layer, except that the above-described metal particles or particles are not used.

In a case where the protective layer forming step is provided, the order is not particularly limited as long as the protective layer forming step is provided before the through-hole forming step, and the protective layer forming step may be performed before or after or simultaneously with the above-described resin layer forming step.

[Particle Removing Step]

In the particle removing step of the manufacturing method according to the second embodiment of the invention, the particles are removed from the resin layer after the above-described resin layer forming step.

The method of removing the particles is not particularly limited. For example, in the resin layer in which the particles are partially embedded as shown in Fig. 2A, the particles can be removed by applying an external force to portions of the particles not embedded in the resin layer using a sponge, a brush, or the like.

In the invention, since it is possible to rapidly remove the particles without a change in shape of the resin layer, the method of removing the particles is preferably a method of removing the particles by rubbing the surface of the resin layer in which the particles are at least partially embedded while the surface of the resin layer is immersed in a solvent.

Here, "the surface of the resin layer in which the particles are at least partially embedded" refers to the particles and the surface of the resin layer in a case where the particles are partially embedded in the resin layer as shown in Fig. 2A. In a case where the particles are completely embedded in the resin layer, "the surface of the resin layer in which the particles are at least partially embedded" refers to the surface of the resin layer.

The solvent is not particularly limited as long as it is a solvent capable of dissolving the resin layer. For example, a solvent similar to the solvent described as an optional component of the composition which is used in the above-described resin layer forming step can be used.

The method of rubbing the surface of the resin layer is not particularly limited, and examples thereof include a rubbing method using a sponge, a brush (for example, a wire brush or a nylon brush roll), or the like.

[Through-Hole Forming Step]

In the through-hole forming step of the manufacturing method according to the first embodiment of the invention,

after the above-described resin layer forming step, the metal foil having the resin layer is brought into contact with an etchant to dissolve the metal particles and a part of the metal foil, and through-holes are formed in the metal foil. This step is a step of forming through-holes in the metal foil by a so-called chemical etching treatment.

In the through-hole forming step of the manufacturing method according to the second embodiment of the invention, after the above-described particle removing step, the metal foil having the resin layer is brought into contact with an etchant to form through-holes in the metal foil. This step is a step of forming through-holes in the metal foil by a so-called chemical etching treatment.

The through-hole forming step in the first embodiment is the same as the through-hole forming step in the second embodiment, except that the metal particles are also dissolved together with the metal foil. Therefore, the description will be collectively given as follows, except for the differences between the through-hole forming step of the first embodiment and the through-hole forming step of the second embodiment.

[Etchant]

As the etchant, an acidic or alkaline chemical solution or the like can be appropriately used as long as it is an etchant suitable for the metal species of the metal foil and the metal particles.

Examples of the acid include hydrochloric acid, sulfuric acid, nitric acid, hydrofluoric acid, hydrogen peroxide, and acetic acid.

Examples of the alkali include caustic soda and caustic potash.

Examples of the alkali metal salt include alkali metal silicates such as sodium metasilicate, sodium silicate, potassium metasilicate, and potassium silicate; alkali metal carbonates such as sodium carbonate and potassium carbonate; alkali metal aluminates such as sodium aluminate and potassium aluminate; alkali metal aldonates such as sodium gluconate and potassium gluconate; and alkali metal hydrogenphosphates such as sodium secondary phosphate, potassium secondary phosphate, sodium tertiary phosphate, and potassium tertiary phosphate.

Inorganic salts such as iron chloride (III) and copper chloride (II) can also be used. These may be used alone or as a mixture of two or more types thereof.

[Treatment Method]

The treatment for forming the through-holes is performed by bringing the metal foil having the resin layer containing the metal particles or the metal foil having the resin layer after the particle removing step into contact with the above-described etchant.

The contacting method is not particularly limited, and examples thereof include an immersion method and a spray method. Among these, an immersion method is preferable.

The immersion treatment time is preferably 15 seconds to 10 minutes, and more preferably 1 minute to 6 minutes.

The liquid temperature of the etchant during immersion is preferably 25°C to 70°C, and more preferably 30°C to 60°C.

[Resin Layer Removing Step]

In the resin layer removing step of the manufacturing method according to the embodiment of the invention, the resin layer is removed after the above-described through-hole forming step to produce a perforated metal foil having through-holes.

The method of removing the resin layer is not particularly limited, and in a case where the above-described alkaline water soluble polymer is used as the polymer component, a method of dissolving and removing the resin layer using an alkaline aqueous solution is preferable.

[Alkaline Aqueous Solution]

Specific examples of the alkaline aqueous solution include inorganic alkalis such as sodium hydroxide, potassium hydroxide, sodium carbonate, sodium silicate, sodium metasilicate, and aqueous ammonia; primary amines such as ethylamine and n-propylamine; secondary amines such as diethylamine and di-n-butylamine; tertiary amines such as triethylamine and methyldiethylamine; alcohol amines such as dimethylethanolamine and triethanolamine; quaternary ammonium salts such as tetramethylammonium hydroxide and tetraethylammonium hydroxide; and cyclic amines such as pyrrole and piperidine. These may be used alone or in combination of two or more types thereof.

An appropriate amount of alcohols or a surfactant can be added to the alkaline aqueous solution and used.

[Treatment Method]

The treatment for removing the resin layer is performed by, for example, bringing the metal foil having the resin layer after the through-hole forming step into contact with the above-described alkaline aqueous solution.
The contacting method is not particularly limited, and examples thereof include an immersion method and a spray method. Among these, an immersion method is preferable.
The immersion treatment time is preferably 5 seconds to 5 minutes, and more preferably 10 seconds to 2 minutes.
The temperature of the alkaline aqueous solution during immersion is preferably 25°C to 60°C, and more preferably 30°C to 50°C.

[Through-Holes]

In the invention, the average opening diameter of the through-holes of the perforated metal foil, which are formed by the through-hole forming step and the resin layer removing step described above, is preferably 0.1 to 300 μm, and more preferably 1 to 100 μm.
Here, regarding the average opening diameter of the through-holes, the surface of the perforated metal foil is imaged from directly above using a high resolution scanning electron microscope (scanning electron microscope (SEM)) at a magnification of 100 to 10,000 times. In the obtained SEM photograph, at least 20 through-holes having an annular periphery are extracted, and their diameters are read to obtain the opening diameters. The average of the opening diameters is calculated as the average opening diameter.
A magnification within the above-described range can be appropriately selected so as to obtain a SEM photograph in which at least 20 through-holes can be extracted. In addition, the maximum distance between the end portions of the through-hole is measured as the opening diameter. That is, since the shape of the opening of the through-hole is not limited to a substantially circular shape, the maximum distance between the end portions of the through-hole is defined as the opening diameter in a case where the shape of the opening is non-circular. Therefore, for example, even in a case of a through-hole having such a shape that two or more through-holes are integrated, the through-hole is regarded as one through-hole, and the maximum distance between the end portions of the through-hole is defined as the opening diameter.
In addition, the average opening diameter of the through-holes of the perforated metal foil can be adjusted by, for example, an immersion time in the etchant in the above-described through-hole forming step.
In the invention, the average opening ratio by the through-holes in the perforated metal foil, which are formed by the through-hole forming step and the resin layer removing step described above, is preferably 1% to 50%, and more preferably 5% to 30%.
Here, regarding the average opening ratio by the through-holes, a parallel light optical unit is installed on one surface side of the perforated metal foil, parallel light is transmitted, and the surface of the perforated metal foil is imaged using an optical microscope at a magnification of 100 times from the other surface of the perforated metal foil to acquire a photograph. In visual fields of 100 mm×75 mm (at five places) in a 10 cm×10 cm range in the obtained photograph, a proportion (opening area/geometric area) is calculated from the total opening area of the through-holes projected with the transmitted parallel light and the area of the visual field (geometric area), and the average of the proportions in the visual fields (at five places) is calculated as the average opening ratio.
In addition, the average opening ratio by the through-holes in the perforated metal foil can be adjusted by, for example, the content of the metal particles or the particles in the composition which is used in the above-described resin layer forming step.

[Anticorrosion Treatment]

The manufacturing method according to the embodiment of the invention preferably has an anticorrosion treatment step.
The timing of the anticorrosion treatment is not particularly limited. For example, the anticorrosion treatment may be a treatment to be performed on the metal foil which is used in the resin layer forming step, a treatment for adding triazoles or the like to be described later to the alkaline aqueous solution in the resin layer removing step, or a treatment to be performed after the resin layer removing step.
Examples of the anticorrosion treatment include a treatment for immersing the metal foil in a solution having a pH of 5 to 8.5 in which at least triazoles are dissolved in a solvent to form an organic dielectric film.
Preferable examples of the triazoles include benzotriazole (BTA) and tolyltriazole (TTA).
In addition to triazoles, various organic rust preventive materials, thiazoles, imidazoles, mercaptans, triethanolamine, and the like can also be used.
Water or organic solvents (particularly, alcohols) can be appropriately used as a solvent to be used in the

anticorrosion treatment, and the solvent is preferably water mainly composed of deionized water in consideration of the uniformity of an organic dielectric film to be formed, easiness of thickness control at mass production, simplicity, influence on the environment, and the like.

The concentration of the triazoles to be dissolved can be appropriately determined based on the relationship with the thickness of an organic dielectric film to be formed or the treatment time, and may be about 0.005 to 1 wt% in general.

The temperature of the solution may be room temperature. The solution may be warmed and used as necessary.

The immersion time of the metal foil in the solution can be appropriately determined based on the relationship with the concentration of the triazoles to be dissolved or the thickness of an organic dielectric film to be formed, and may be about 0.5 to 30 seconds in general.

Other specific examples of the anticorrosion treatment include a method of forming an inorganic dielectric film mainly composed of a hydrated oxide of chromium by immersing the metal foil in an aqueous solution prepared by dissolving at least one selected from the group of chromium trioxide, chromate, and bichromate in water.

Here, for example, potassium chromate or sodium chromate is preferable as the chromate, and potassium bichromate or sodium bichromate is preferable as the bichromate. In general, the concentration thereof is set to 0.1 to 10 mass%, and the liquid temperature may be about room temperature to 60°C. The pH value of the aqueous solution is not particularly limited from the acidic region to the alkaline region, and is set to 1 to 12 in general.

The immersion time of the metal foil is appropriately selected depending on the thickness of an inorganic dielectric film to be formed and the like.

In the invention, water washing is preferably performed after completion of each of the treatment steps described above. For water washing, pure water, well water, tap water, or the like can be used. In order to prevent the treatment liquids from being carried to the subsequent steps, a nipping device may be used.

[Treatment in Roll-to-Roll Manner]

In the manufacturing method according to the embodiment of the invention, the treatments in the steps may be performed using a cut sheet-like metal foil on a so-called sheet-by-sheet basis, or performed in a so-called roll-to-roll (hereinafter, also referred to as "R to R") manner while a long metal foil is transported in a longitudinal direction according to a predetermined transportation path.

In the invention, R to R refers to a manufacturing method in which while a metal foil is fed from a roll formed by winding a long metal foil and is transported in a longitudinal direction, treatments such as the resin layer forming step and the through-hole forming step described above are continuously performed in order by treatment devices disposed on the transportation path, and the treated metal foil (that is, perforated metal foil) is wound into a roll shape again.

In the manufacturing method according to the first embodiment of the invention, as described above, through-holes are formed by dissolving the metal particles and a part of the metal foil by the through-hole forming step. Therefore, since it is possible to continuously perform the steps without complicating them, each step can be easily performed in a R to R manner.

In the manufacturing method according to the second embodiment of the invention, as described above, through-holes are formed by the through-hole forming step after removal of the particles in the particle removing step. Therefore, since it is possible to continuously perform the steps without complicating them, each step can be easily performed in a R to R manner.

Productivity can be improved by performing the manufacturing method according to the embodiment of the invention in a R to R manner.

[Collector]

The perforated metal foil produced by the manufacturing method according to the embodiment of the invention can be used as a collector for an electric storage device (hereinafter, also referred to as "collector").

In the collector, the perforated metal foil has a plurality of through-holes in a thickness direction. Accordingly, for example, in a case where the collector is used in a lithium ion capacitor, pre-doping of lithium within a short period of time becomes possible, and it becomes possible to more uniformly disperse lithium. In addition, adhesiveness to active material layers or activated carbon is improved, and it is possible to produce electric storage devices which are excellent in terms of productivity such as cycle characteristics, output characteristics, and coating suitability.

Particularly, the collector using the perforated metal foil produced by the manufacturing method according to the embodiment of the invention is further improved in terms of adhesiveness to active material layers, and thus it is possible to produce electric storage devices having improved cycle characteristics.

[Active Material Layer]

The active material layer is not particularly limited, and a known active material layer which is used in a conventional electric storage device can be used.
Specifically, regarding an active material, and a conductive material, a binder, a solvent, and the like which may be contained in the active material layer for a case where the perforated metal foil is used as a collector of a positive electrode, materials described in paragraphs [0077] to [0088] of JP2012-216513A can be appropriately employed, and the content of which is incorporated herein by reference.
Regarding an active material for a case where the perforated metal foil is used as a collector of a negative electrode, materials described in paragraph [0089] of JP2012-216513A can be appropriately employed, and the content of which is incorporated herein by reference.

[Electric Storage Device]

An electrode in which the perforated metal foil produced by the manufacturing method according to the embodiment of the invention is used as a collector can be used as a positive electrode or a negative electrode of an electric storage device.
Here, regarding a specific configuration and uses of the electric storage device (particularly, secondary battery), materials and uses described in paragraphs [0090] to [0123] of JP2012-216513A can be appropriately employed, and the content of which is incorporated herein by reference.

[Positive Electrode]

A positive electrode in which the perforated metal foil produced by the manufacturing method according to the embodiment of the invention is used as a collector has a positive electrode collector in which the perforated metal foil is used for the positive electrode and a layer containing a positive electrode active material which is formed on a surface of the positive electrode collector (positive electrode active material layer).
Here, regarding the positive electrode active material, and a conductive material, a binder, a solvent, and the like which may be contained in the positive electrode active material layer, materials described in paragraphs [0077] to [0088] of JP2012-216513A can be appropriately employed, and the content of which is incorporated herein by reference.

[Negative Electrode]

A negative electrode in which the perforated metal foil produced by the manufacturing method according to the embodiment of the invention is used as a collector has a negative electrode collector in which the perforated metal foil is used for the negative electrode and a layer containing a negative electrode active material which is formed on a surface of the negative electrode collector.
Here, regarding the negative electrode active material, materials described in paragraph [0089] of JP2012-216513A can be appropriately employed, and the content of which is incorporated herein by reference.

[Other Uses]

The perforated metal foil produced by the manufacturing method according to the embodiment of the invention can be used not only as a current collector for an electric storage device, but also as a heat resistant filter, a heat resistant fine particle filter, a sound insulating material, an oil recovery filter, an electrostatic filter, an antibacterial filter, a liquid modification filter, a water electrolysis filter, an exhaust gas purification filter, a food filtration filter, a marine biological filtration filter, a dust filter, a deoxyribonucleic acid (DNA) filter, a fine powder classification filter, a solid-liquid separation filter, a deodorization filter, a photocatalyst carrier, a hydrogen generating catalyst carrier, an enzymatic electrode, a carrier of a noble metal absorber, an antibacterial carrier, an adsorbent, an absorbent, an optical filter, a far infrared cut filter, a sound insulating/absorbing material, an electromagnetic wave shield, a gas diffusion layer/separator of a direct type fuel cell, a net for oxygen supply to a microorganism storage container, a building material, a material for use in illumination, a material for use in metal-like decoration, and the like.

Examples

Hereinafter, the invention will be described in more detail based on examples. Materials, amounts, ratios, treatment contents, treatment procedures, and the like used in the following examples can be appropriately changed without departing from the gist of the invention. Accordingly, the scope of the invention is not restrictively interpreted by

the following examples.

[Example 1-1]

First, the manufacturing method according to the first embodiment of the invention was performed as an example.
A copper foil (JIS C 1100-H, electrolytic copper foil) having an average thickness of 15 μm and a size of 200 mm×200 mm was used as a metal foil.

<(a-1) Resin Layer Forming Step>

A resin layer forming composition 1 prepared to have the following composition was applied to one surface of a copper foil and dried to form a resin layer A1 having a thickness of about 1 μm.
A composition prepared in the same ratio as the following resin layer forming composition 1, except that no copper particles were contained, was applied to the other surface of the copper foil and dried to form a protective layer B1 having a thickness of about 1 μm.

| Resin Layer Forming Composition 1 | |
|---|---|
| • m,p-Cresol novolak (m/p ratio=6/4, weight-average molecular weight: 4,100) | 1.2 g |
| • HXR-Cu (copper particles, average particle diameter: 5.0 μm, manufactured by Nippon Atomized Metal Powders Corporation) | 0.3 g |
| • MEGAFACE F-780-F (surfactant, manufactured by DIC Corporation) | 0.1 g |
| • Methyl ethyl ketone | 1.0 g |
| • 1-Methoxy-2-propanol | 5.0 g |

<(b-1) Through-Hole Forming Step>

Next, the copper foil having the resin layer A1 and the protective layer B1 was immersed for 5 minutes in an etchant [concentration of iron (III) chloride: 30 mass%, concentration of hydrochloric acid: 3.65 mass%] kept at 50°C, and then washed with water by spraying and dried to form through-holes.

<(c) Resin Layer Removing Step>

Next, the copper foil after the formation of the through-holes was immersed for 120 seconds in an alkaline aqueous solution (concentration of sodium hydroxide: 0.4 mass%) having a liquid temperature of 50°C to dissolve and remove the resin layer A1 and the protective layer B 1.
Then, the copper foil was washed with water by spraying and dried to produce a perforated metal foil having through-holes.

[Example 1-2]

A perforated metal foil having through-holes was produced in the same manner as in Example 1-1, except that the following (a-2) resin layer forming step was performed instead of (a-1) resin layer forming step.

<(a-2) Resin Layer Forming Step>

A resin layer forming composition 2 prepared to have the following composition was applied to one surface of a copper foil and dried to form a resin layer A2 having a thickness of about 0.5 μm.
A composition prepared in the same ratio as the following resin layer forming composition 2, except that no copper particles were contained, was applied to the other surface of the copper foil and dried to form a protective layer B2 having a thickness of about 1 μm.

| Resin Layer Forming Composition 2 | |
|---|---|
| • m,p-Cresol novolak (m/p ratio=6/4, weight-average molecular weight: 4,100) | 0.6 g |
| • ATP-Cu (copper particles, average particle diameter: 1.5 μm, manufactured by Nippon Atomized Metal Powders Corporation) | 0.1 g |

(continued)

| Resin Layer Forming Composition 2 | |
|---|---|
| • MEGAFACE F-780-F (surfactant, manufactured by DIC Corporation) | 0.1 g |
| • Methyl ethyl ketone | 1.0 g |
| • 1-Methoxy-2-propanol | 5.0 g |

[Example 1-3]

A perforated metal foil having through-holes was produced in the same manner as in Example 1-1, except that an aluminum foil (JIS H 4160, alloy number: 1085-H) having an average thickness of 20 μm was used instead of the copper foil, aluminum particles (#700, average particle diameter: 5 to 6 μm, manufactured by Minaruko Ltd.) were used instead of the copper particles, and the following (b-2) through-hole forming step was performed instead of (b-1) through-hole forming step.

<(b-2) Through-Hole Forming Step>

Next, the aluminum foil having the resin layer A1 and the protective layer B1 was immersed for 1 minute in an etchant [concentration of copper (II) chloride: 0.65 mass%, concentration of hydrochloric acid: 9 mass%] cooled to 10°C, and then washed with water by spraying and dried to form through-holes.

[Example 1-4]

A perforated metal foil having through-holes was produced in the same manner as in Example 1-1, except that a stainless steel foil (SUS304) having an average thickness of 15 μm was used instead of the copper foil.

[Example 1-5]

A perforated metal foil having through-holes was produced in the same manner as in Example 1-1, except that a nickel foil having an average thickness of 15 μm was used instead of the copper foil, and the following (b-3) through-hole forming step was performed instead of (b-1) through-hole forming step.

<(b-3) Through-Hole Forming Step>

Next, the nickel foil having the resin layer A1 and the protective layer B1 was immersed for 3 minutes in a nickel etching liquid-H (manufactured by NIHON-SANGYO Co., Ltd.) kept at 40°C, and then washed with water by spraying and dried to form through-holes.

[Example 1-6]

A perforated metal foil having through-holes was produced in the same manner as in Example 1, except that the following (a-3) resin layer forming step was performed instead of (a-1) resin layer forming step.

<(a-3) Resin Layer Forming Step>

A resin layer forming composition 3 prepared to have the following composition was applied to one surface of a copper foil and dried to form a resin layer A3 having a thickness of about 1 μm.

A composition prepared in the same ratio as the following resin layer forming composition 3, except that no copper particles were contained, was applied to the other surface of the copper foil and dried to form a protective layer B3 having a thickness of about 1 μm.

| Resin Layer Forming Composition 3 | |
|---|---|
| • Copolymer of methacrylic acid, ethyl methacrylate, and butyl methacrylate (26mol %/37 mol%/37 mol%, weight-average molecular weight: 50,000) | 1.2 g |
| • HXR-Cu (copper particles, average particle diameter: 5.0 μm, manufactured by Nippon Atomized Metal Powders Corporation) | 0.3 g |

(continued)

| Resin Layer Forming Composition 3 | |
|---|---|
| • MEGAFACE F-780-F (surfactant, manufactured by DIC Corporation) | 0.1 g |
| • Methyl ethyl ketone | 1.0 g |
| • 1-Methoxy-2-propanol | 5.0 g |

[Example 1-7]

A perforated metal foil having through-holes was produced in the same manner as in Example 1-1, except that the following (a-4) resin layer forming step was performed instead of (a-1) resin layer forming step.

<(a-4) Resin Layer Forming Step>

A resin layer forming composition 4 prepared to have the following composition was applied to one surface of a copper foil and dried to form a resin layer A4 having a thickness of about 0.5 μm.

A composition prepared in the same ratio as the following resin layer forming composition 4, except that no copper particles were contained, was applied to the other surface of the copper foil and dried to form a protective layer B4 having a thickness of about 1 μm.

| Resin Layer Forming Composition 4 | |
|---|---|
| • Copolymer of methacrylic acid, ethyl methacrylate, and butyl methacrylate (26 mol%/37 mol%/37 mol%, weight-average molecular weight: 50,000) | 0.6 g |
| • ATP-Cu (copper particles, average particle diameter: 1.5 μm, manufactured by Nippon Atomized Metal Powders Corporation) | 0.1 g |
| • MEGAFACE F-780-F (surfactant, manufactured by DIC Corporation) | 0.1 g |
| • Methyl ethyl ketone | 1.0 g |
| • 1-Methoxy-2-propanol | 5.0 g |

[Example 1-8]

A perforated metal foil having through-holes was produced in the same manner as in Example 1-6, except that an aluminum foil (JIS H 4160, alloy number: 1085-H) having an average thickness of 20 μm was used instead of the copper foil, aluminum particles (#700, average particle diameter: 5 to 6 μm, manufactured by Minaruko Ltd.) were used instead of the copper particles, and the following (b-4) through-hole forming step was performed instead of (b-1) through-hole forming step.

<(b-4) Through-Hole Forming Step>

Next, the aluminum foil having the resin layer A3 and the protective layer B3 was immersed for 1 minute in an etchant [concentration of copper (II) chloride: 0.65 mass%, concentration of hydrochloric acid: 9 mass%] cooled to 10°C, and then washed with water by spraying and dried to form through-holes.

[Example 1-9]

A perforated metal foil having through-holes was produced in the same manner as in Example 1-6, except that a stainless steel foil (SUS304) having an average thickness of 15 μm was used instead of the copper foil.

[Example 1-10]

A perforated metal foil having through-holes was produced in the same manner as in Example 1-6, except that a nickel foil having an average thickness of 15 μm was used instead of the copper foil, and the following (b-5) through-hole forming step was performed instead of (b-1) through-hole forming step.

<(b-5) Through-Hole Forming Step>

Next, the nickel foil having the resin layer A3 and the protective layer B3 was immersed for 3 minutes in a nickel etching liquid-H (manufactured by NIHON-SANGYO Co., Ltd.) kept at 40°C, and then washed with water by spraying and dried to form through-holes.

[Example 1-11]

A perforated metal foil having through-holes was produced in the same manner as in Example 1-1, except that the following (a-5) resin layer forming step was performed instead of (a-1) resin layer forming step.

<(a-5) Resin Layer Forming Step>

A resin layer forming composition 5 prepared to have the following composition was applied to one surface of a copper foil and dried to form a resin layer A5 having a thickness of about 1 μm.

A composition prepared in the same ratio as the following resin layer forming composition 5, except that no copper particles were contained, was applied to the other surface of the copper foil and dried to form a protective layer B5 having a thickness of about 1 μm.

| Resin Layer Forming Composition 5 | |
|---|---|
| • Copolymer of p-hydroxystyrene (weight-average molecular weight: 30,000) | 1.2 g |
| • HXR-Cu (copper particles, average particle diameter: 5.0 μm, manufactured by Nippon Atomized Metal Powders Corporation) | 0.3 g |
| • MEGAFACE F-780-F (surfactant, manufactured by DIC Corporation) | 0.1 g |
| • Methyl ethyl ketone | 1.0 g |
| • 1-Methoxy-2-propanol | 5.0 g |

[Example 1-12]

A perforated metal foil having through-holes was produced in the same manner as in Example 1-1, except that the following (a-6) resin layer forming step was performed instead of (a-1) resin layer forming step.

<(a-6) Resin Layer Forming Step>

A resin layer forming composition 6 prepared to have the following composition was applied to one surface of a copper foil and dried to form a resin layer A6 having a thickness of about 0.5 μm.

A composition prepared in the same ratio as the following resin layer forming composition 6, except that no copper particles were contained, was applied to the other surface of the copper foil and dried to form a protective layer B6 having a thickness of about 1 μm.

| Resin Layer Forming Composition 6 | |
|---|---|
| • Copolymer of p-hydroxystyrene (weight-average molecular weight: 30,000) | 1.2 g |
| • ATP-Cu (copper particles, average particle diameter: 1.5 μm, manufactured by Nippon Atomized Metal Powders Corporation) | 0.1 g |
| • MEGAFACE F-780-F (surfactant, manufactured by DIC Corporation) | 0.1 g |
| • Methyl ethyl ketone | 1.0 g |
| • 1-Methoxy-2-propanol | 5.0 g |

[Example 1-13]

A perforated metal foil having through-holes was produced in the same manner as in Example 1-11, except that an aluminum foil (JIS H 4160, alloy number: 1085-H) having an average thickness of 20 μm was used instead of the copper foil, aluminum particles (#700, average particle diameter: 5 to 6 μm, manufactured by Minaruko Ltd.) were used instead of the copper particles, and the following (b-6) through-hole forming step was performed instead of (b-1)

through-hole forming step.

<(b-6) Through-Hole Forming Step>

Next, the aluminum foil having the resin layer A5 and the protective layer B5 was immersed for 1 minute in an etchant [concentration of copper (II) chloride: 0.65 mass%, concentration of hydrochloric acid: 9 mass%] cooled to 10°C, and then washed with water by spraying and dried to form through-holes.

[Example 1-14]

A perforated metal foil having through-holes was produced in the same manner as in Example 1-11, except that a stainless steel foil (SUS304) having an average thickness of 15 μm was used instead of the copper foil.

[Example 1-15]

A perforated metal foil having through-holes was produced in the same manner as in Example 1-11, except that a nickel foil having an average thickness of 15 μm was used instead of the copper foil, and the following (b-7) through-hole forming step was performed instead of (b-1) through-hole forming step.

<(b-7) Through-Hole Forming Step>

Next, the nickel foil having the resin layer A5 and the protective layer B5 was immersed for 3 minutes in a nickel etching liquid-H (manufactured by NIHON-SANGYO Co., Ltd.) kept at 40°C, and then washed with water by spraying and dried to form through-holes.

Regarding the perforated metal foils produced in Examples 1-1 to 1-15, the average opening ratio by the through-holes and the average opening diameter were measured by the above-described methods. The results are shown in the following Table 1.

[Table 1]

| | Metal Foil | Metal Particles | Average Opening Ratio | Average Opening Diameter |
|---|---|---|---|---|
| | | | % | μm |
| Example 1-1 | Copper Foil | Copper Particles | 3 | 15 |
| Example 1-2 | Copper Foil | Copper Particles | 3 | 14 |
| Example 1-3 | Aluminum Foil | Aluminum Particles | 4 | 21 |
| Example 1-4 | Stainless Steel Foil | Copper Particles | 3 | 16 |
| Example 1-5 | Nickel Foil | Copper Particles | 4 | 18 |
| Example 1-6 | Copper Foil | Copper Particles | 3 | 16 |
| Example 1-7 | Copper Foil | Copper Particles | 3 | 15 |
| Example 1-8 | Aluminum Foil | Aluminum Particles | 4 | 20 |
| Example 1-9 | Stainless Steel Foil | Copper Particles | 3 | 16 |
| Example 1-10 | Nickel Foil | Copper Particles | 4 | 19 |
| Example 1-11 | Copper Foil | Copper Particles | 4 | 21 |
| Example 1-12 | Copper Foil | Copper Particles | 4 | 18 |
| Example 1-13 | Aluminum Foil | Aluminum Particles | 5 | 25 |
| Example 1-14 | Stainless Steel Foil | Copper Particles | 4 | 19 |
| Example 1-15 | Nickel Foil | Copper Particles | 5 | 23 |

From the results of Examples 1-1 to 1-15, it has been found that a metal foil having a plurality of fine through-holes can be easily produced in a case where a resin layer is formed using a composition containing a plurality of metal particles and a polymer component and through-holes are formed by dissolving the metal particles and a part of the

metal foil.

[Example 2-1]

Next, the manufacturing method according to the second embodiment of the invention was performed as an example.

A copper foil (JIS C 1100-H, electrolytic copper foil) having an average thickness of 15 μm and a size of 200 mm×200 mm was used as a metal foil.

<(d-1) Resin Layer Forming Step>

A resin layer forming composition 7 prepared to have the following composition was applied to one surface of a copper foil and dried to form a resin layer C1 having a thickness of about 1 μm.

A composition prepared in the same ratio as the following resin layer forming composition 7, except that no silica particles were contained, was applied to the other surface of the copper foil and dried to form a protective layer D1 having a thickness of about 1 μm.

| Resin Layer Forming Composition 7 | |
|---|---|
| • m,p-Cresol novolak (m/p ratio=6/4, weight-average molecular weight: 4,100) | 1.2 g |
| • TOSPEARL 2000B (silica particles of 6.0 μm, manufactured by Momentive Performance Materials Inc.) | 0.3 g |
| • MEGAFACE F-780-F (surfactant, manufactured by DIC Corporation) | 0.1 g |
| • Methyl ethyl ketone | 1.0 g |
| • 1-Methoxy-2-propanol | 5.0 g |

<(e) Particle Removing Step>

Next, the copper foil having the resin layer C1 and the protective layer D1 was immersed in methyl ethyl ketone at room temperature (23°C), and the surface of the resin layer C1 in which the silica particles were embedded and the surfaces of the silica particles were rubbed in a reciprocating manner 10 times with a sponge to remove the silica particles from the resin layer C1.

<(f-1) Through-Hole Forming Step>

Next, the copper foil having the resin layer C1 and the protective layer D1 after the removal of the silica particles was immersed for 5 minutes in an etchant [concentration of iron (III) chloride: 30 mass%, concentration of hydrochloric acid: 3.65 mass%] kept at 50°C, and then washed with water by spraying and dried to form through-holes.

<(g) Resin Layer Removing Step>

Next, the copper foil after the formation of the through-holes was immersed for 120 seconds in an alkaline aqueous solution (concentration of sodium hydroxide: 0.4 mass%) having a liquid temperature of 50°C to dissolve and remove the resin layer C1 and the protective layer D1.

Then, the copper foil was washed with water by spraying and dried to produce a perforated metal foil having through-holes.

[Example 2-2]

A perforated metal foil having through-holes was produced in the same manner as in Example 2-1, except that the following (d-2) resin layer forming step was performed instead of (d-1) resin layer forming step.

<(d-2) Resin Layer Forming Step>

A resin layer forming composition 8 prepared to have the following composition was applied to one surface of a copper foil and dried to form a resin layer C2 having a thickness of about 0.5 μm.

A composition prepared in the same ratio as the following resin layer forming composition 8, except that no

silica particles were contained, was applied to the other surface of the copper foil and dried to form a protective layer D2 having a thickness of about 1 μm.

| Resin Layer Forming Composition 8 | |
|---|---|
| • m,p-Cresol novolak (m/p ratio=6/4, weight-average molecular weight: 4,100) | 0.6 g |
| • TOSPEARL 120 (silica particles of 2.0 μm, manufactured by Momentive Performance Materials Inc.) | 0.1 g |
| • MEGAFACE F-780-F (surfactant, manufactured by DIC Corporation) | 0.1 g |
| • Methyl ethyl ketone | 1.0 g |
| • 1-Methoxy-2-propanol | 5.0 g |

[Example 2-3]

A perforated metal foil having through-holes was produced in the same manner as in Example 2-1, except that an aluminum foil (JIS H 4160, alloy number: 1085-H) having an average thickness of 20 μm was used instead of the copper foil, and the following (f-2) through-hole forming step was performed instead of (f-1) through-hole forming step.

<(f-2) Through-Hole Forming Step>

Next, the aluminum foil having the resin layer C1 and the protective layer D1 after the removal of the silica particles was immersed for 1 minute in an etchant [concentration of copper (II) chloride: 0.65 mass%, concentration of hydrochloric acid: 9 mass%] cooled to 10°C, and then washed with water by spraying and dried to form through-holes.

[Example 2-4]

A perforated metal foil having through-holes was produced in the same manner as in Example 2-1, except that a stainless steel foil (SUS304) having an average thickness of 15 μm was used instead of the copper foil.

[Example 2-5]

A perforated metal foil having through-holes was produced in the same manner as in Example 2-1, except that a nickel foil having an average thickness of 15 μm was used instead of the copper foil, and the following (f-3) through-hole forming step was performed instead of (f-1) through-hole forming step.

<(f-3) Through-Hole Forming Step>

Next, the nickel foil having the resin layer C1 and the protective layer D1 after the removal of the silica particles was immersed for 3 minutes in a nickel etching liquid-H (manufactured by NIHON-SANGYO Co., Ltd.) kept at 40°C, and then washed with water by spraying and dried to form through-holes.

[Example 2-6]

A perforated metal foil having through-holes was produced in the same manner as in Example 2-1, except that the following (d-3) resin layer forming step was performed instead of (d-1) resin layer forming step.

<(d-3) Resin Layer Forming Step>

A resin layer forming composition 9 prepared to have the following composition was applied to one surface of a copper foil and dried to form a resin layer C3 having a thickness of about 1 μm.

A composition prepared in the same ratio as the following resin layer forming composition 9, except that no silica particles were contained, was applied to the other surface of the copper foil and dried to form a protective layer D3 having a thickness of about 1 μm.

| Resin Layer Forming Composition 9 | |
|---|---|
| • Copolymer of methacrylic acid, ethyl methacrylate, and butyl methacrylate (26 mol%/37 mol%/37 mol%, weight-average molecular weight: 50,000) | 1.2 g |

(continued)

| Resin Layer Forming Composition 9 | |
|---|---|
| • TOSPEARL 2000B (silica particles of 6.0 μm, manufactured by Momentive Performance Materials Inc.) | 0.3 g |
| • MEGAFACE F-780-F (surfactant, manufactured by DIC Corporation) | 0.1 g |
| • Methyl ethyl ketone | 1.0 g |
| • 1-Methoxy-2-propanol | 5.0 g |

[Example 2-7]

A perforated metal foil having through-holes was produced in the same manner as in Example 2-1, except that the following (d-4) resin layer forming step was performed instead of (d-1) resin layer forming step.

<(d-4) Resin Layer Forming Step>

A resin layer forming composition 10 prepared to have the following composition was applied to one surface of a copper foil and dried to form a resin layer C4 having a thickness of about 0.5 μm.

A composition prepared in the same ratio as the following resin layer forming composition 10, except that no silica particles were contained, was applied to the other surface of the copper foil and dried to form a protective layer D4 having a thickness of about 1 μm.

| Resin Layer Forming Composition 10 | |
|---|---|
| • Copolymer of methacrylic acid, ethyl methacrylate, and butyl methacrylate (26 mol%/37 mol%/37 mol%, weight-average molecular weight: 50,000) | 0.6 g |
| • TOSPEARL 120 (silica particles of 2.0 μm, manufactured by Momentive Performance Materials Inc.) | 0.1 g |
| • MEGAFACE F-780-F (surfactant, manufactured by DIC Corporation) | 0.1 g |
| • Methyl ethyl ketone | 1.0 g |
| • 1-Methoxy-2-propanol | 5.0 g |

[Example 2-8]

A perforated metal foil having through-holes was produced in the same manner as in Example 2-6, except that an aluminum foil (JIS H 4160, alloy number: 1085-H) having an average thickness of 20 μm was used instead of the copper foil, and the following (f-4) through-hole forming step was performed instead of (f-1) through-hole forming step.

<(f-4) Through-Hole Forming Step>

Next, the aluminum foil having the resin layer C3 and the protective layer D3 after the removal of the silica particles was immersed for 1 minute in an etchant [concentration of copper (II) chloride: 0.65 mass%, concentration of hydrochloric acid: 9 mass%] cooled to 10°C, and then washed with water by spraying and dried to form through-holes.

[Example 2-9]

A perforated metal foil having through-holes was produced in the same manner as in Example 2-6, except that a stainless steel foil (SUS304) having an average thickness of 15 μm was used instead of the copper foil.

[Example 2-10]

A perforated metal foil having through-holes was produced in the same manner as in Example 2-6, except that a nickel foil having an average thickness of 15 μm was used instead of the copper foil, and the following (f-5) through-hole forming step was performed instead of (f-1) through-hole forming step.

<(f-5) Through-Hole Forming Step>

Next, the nickel foil having the resin layer C3 and the protective layer D3 after the removal of the silica particles was immersed for 3 minutes in a nickel etching liquid-H (manufactured by NIHON-SANGYO Co., Ltd.) kept at 40°C, and then washed with water by spraying and dried to form through-holes.

[Example 2-11]

A perforated metal foil having through-holes was produced in the same manner as in Example 2-1, except that the following (d-5) resin layer forming step was performed instead of (d-1) resin layer forming step.

<(d-5) Resin Layer Forming Step>

A resin layer forming composition 11 prepared to have the following composition was applied to one surface of a copper foil and dried to form a resin layer C5 having a thickness of about 1 μm.

A composition prepared in the same ratio as the following resin layer forming composition 11, except that no silica particles were contained, was applied to the other surface of the copper foil and dried to form a protective layer D5 having a thickness of about 1 μm.

| Resin Layer Forming Composition 11 | |
|---|---|
| • Copolymer of p-hydroxystyrene (weight-average molecular weight: 30,000) | 1.2 g |
| • TOSPEARL 2000B (silica particles of 6.0 μm, manufactured by Momentive Performance Materials Inc.) | 0.3 g |
| • MEGAFACE F-780-F (surfactant, manufactured by DIC Corporation) | 0.1 g |
| • Methyl ethyl ketone | 1.0 g |
| • 1-Methoxy-2-propanol | 5.0 g |

[Example 2-12]

A perforated metal foil having through-holes was produced in the same manner as in Example 2-1, except that the following (d-6) resin layer forming step was performed instead of (d-1) resin layer forming step.

<(d-6) Resin Layer Forming Step>

A resin layer forming composition 12 prepared to have the following composition was applied to one surface of a copper foil and dried to form a resin layer C6 having a thickness of about 0.5 μm.

A composition prepared in the same ratio as the following resin layer forming composition 12, except that no silica particles were contained, was applied to the other surface of the copper foil and dried to form a protective layer D6 having a thickness of about 1 μm.

| Resin Layer Forming Composition 12 | |
|---|---|
| • Copolymer of p-hydroxystyrene (weight-average molecular weight: 30,000) | 1.2 g |
| • TOSPEARL 120 (silica particles of 2.0 μm, manufactured by Momentive Performance Materials Inc.) | 0.1 g |
| • MEGAFACE F-780-F (surfactant, manufactured by DIC Corporation) | 0.1 g |
| • Methyl ethyl ketone | 1.0 g |
| • 1-Methoxy-2-propanol | 5.0 g |

[Example 2-13]

A perforated metal foil having through-holes was produced in the same manner as in Example 2-11, except that an aluminum foil (JIS H 4160, alloy number: 1085-H) having an average thickness of 20 μm was used instead of the copper foil, and the following (f-6) through-hole forming step was performed instead of (f-1) through-hole forming step.

<(f-6) Through-Hole Forming Step>

Next, the aluminum foil having the resin layer C5 and the protective layer D5 after the removal of the silica particles was immersed for 1 minute in an etchant [concentration of copper (II) chloride: 0.65 mass%, concentration of hydrochloric acid: 9 mass%] cooled to 10°C, and then washed with water by spraying and dried to form through-holes.

[Example 2-14]

A perforated metal foil having through-holes was produced in the same manner as in Example 2-11, except that a stainless steel foil (SUS304) having an average thickness of 15 μm was used instead of the copper foil.

[Example 2-15]

A perforated metal foil having through-holes was produced in the same manner as in Example 2-11, except that a nickel foil having an average thickness of 15 μm was used instead of the copper foil, and the following (f-7) through-hole forming step was performed instead of (f-1) through-hole forming step.

<(f-7) Through-Hole Forming Step>

Next, the nickel foil having the resin layer C5 and the protective layer D5 after the removal of the silica particles was immersed for 3 minutes in a nickel etching liquid-H (manufactured by NIHON-SANGYO Co., Ltd.) kept at 40°C, and then washed with water by spraying and dried to form through-holes.

Regarding the perforated metal foils produced in Examples 2-1 to 2-15, the average opening ratio by the through-holes and the average opening diameter were measured by the above-described methods. The results are shown in the following Table 2.

[Table 2]

| | Metal Foil (base material) | Average Opening Ratio | Average Opening Diameter |
|---|---|---|---|
| | | % | μm |
| Example 2-1 | Copper | 3 | 15 |
| Example 2-2 | Copper | 3 | 14 |
| Example 2-3 | Aluminum | 4 | 21 |
| Example 2-4 | Stainless Steel | 3 | 16 |
| Example 2-5 | Nickel | 4 | 18 |
| Example 2-6 | Copper | 3 | 16 |
| Example 2-7 | Copper | 3 | 15 |
| Example 2-8 | Aluminum | 4 | 20 |
| Example 2-9 | Stainless Steel | 3 | 16 |
| Example 2-10 | Nickel | 4 | 19 |
| Example 2-11 | Copper | 4 | 21 |
| Example 2-12 | Copper | 4 | 18 |
| Example 2-13 | Aluminum | 5 | 25 |
| Example 2-14 | Stainless Steel | 4 | 19 |
| Example 2-15 | Nickel | 5 | 23 |

From the results of Examples 2-1 to 2-15, it has been found that a metal foil having a plurality of fine through-holes can be easily produced in a case where a resin layer is formed using a composition containing a plurality of particles and a polymer component and through-holes are formed after removal of the particles from the resin layer.

Explanation of References

1: metal foil
2: metal particles (particles)
3: resin layer
4: protective layer
5: recess
6, 7: through-holes
10: perforated metal foil

## Claims

1. A perforated metal foil manufacturing method comprising in order:

   a resin layer forming step of forming, using a composition containing a plurality of metal particles and a polymer component, a resin layer in which the metal particles are partially embedded on one principal surface of a metal foil;
   a through-hole forming step of forming through-holes in the metal foil by bringing the metal foil having the resin layer into contact with an etchant to dissolve the metal particles and a part of the metal foil; and
   a resin layer removing step of removing the resin layer to produce a perforated metal foil having through-holes.

2. The perforated metal foil manufacturing method according to claim 1,
   wherein in the resin layer forming step, the resin layer is formed so as to satisfy Formula (1):

$$n_1 < r_1 \ldots (1)$$

   in Formula (1), $n_1$ represents a thickness of the resin layer to be formed, $r_1$ represents an average particle diameter of the metal particles which are contained in the composition, and each of units of $n_1$ and $r_1$ is $\mu$m.

3. The perforated metal foil manufacturing method according to claim 1 or 2,
   wherein the metal foil and the metal particles contain the same metal atom.

4. A perforated metal foil manufacturing method comprising in order:

   a resin layer forming step of forming, using a composition containing a plurality of particles and a polymer component, a resin layer in which the particles are at least partially embedded on one principal surface of a metal foil;
   a particle removing step of removing the particles from the resin layer;
   a through-hole forming step of forming through-holes in the metal foil by bringing the metal foil having the resin layer into contact with an etchant; and
   a resin layer removing step of removing the resin layer to produce a perforated metal foil having through-holes.

5. The perforated metal foil manufacturing method according to claim 4,
   wherein in the resin layer forming step, the resin layer is formed so as to satisfy Formula (2):

$$n_2 < r_2/2 \ldots (2)$$

   in Formula (2), $n_2$ represents a thickness of the resin layer to be formed, $r_2$ represents an average particle diameter of the particles which are contained in the composition, and each of units of $n_2$ and $r_2$ is $\mu$m.

6. The perforated metal foil manufacturing method according to claim 4 or 5,
   wherein in the particle removing step, the particles are removed by rubbing the surface of the resin layer in which

the particles are at least partially embedded while the surface of the resin layer is immersed in a solvent.

**7.** The perforated metal foil manufacturing method according to any one of claims 1 to 6, wherein in the resin layer forming step, the resin layer is formed by applying the composition.

**8.** The perforated metal foil manufacturing method according to any one of claims 1 to 7, wherein the polymer component which is contained in the composition is a resin material selected from the group consisting of phenolic resins, acrylic resins, and polyimide-based resins.

**9.** The perforated metal foil manufacturing method according to any one of claims 1 to 8, wherein the resin layer which is formed by the resin layer forming step has a thickness of 0.5 to 4 μm.

**10.** The perforated metal foil manufacturing method according to any one of claims 1 to 9, wherein the metal particles or the particles which are contained in the composition have an average particle diameter of 1 to 10 μm.

**11.** The perforated metal foil manufacturing method according to any one of claims 1 to 10, wherein a specific gravity of the metal particles or the particles which are contained in the composition is greater than a specific gravity of the polymer component which is contained in the composition.

**12.** The perforated metal foil manufacturing method according to claim 11, wherein the specific gravity of the metal particles or the particles which are contained in the composition is 1.5 or greater, and the specific gravity of the polymer component which is contained in the composition is 0.9 or greater and less than 1.5.

**13.** The perforated metal foil manufacturing method according to any one of claims 1 to 12, wherein the metal foil is a foil selected from the group consisting of aluminum foil, copper foil, silver foil, gold foil, platinum foil, stainless steel foil, titanium foil, tantalum foil, molybdenum foil, niobium foil, zirconium foil, tungsten foil, beryllium copper foil, phosphor bronze foil, brass foil, nickel silver foil, tin foil, lead foil, zinc foil, solder foil, iron foil, nickel foil, Permalloy foil, nichrome foil, 42 alloy foil, Kovar foil, Monel foil, Inconel foil, and Hastelloy foil, or a foil formed by laminating a foil selected from the group and a metal of a different type from the selected foil.

**14.** The perforated metal foil manufacturing method according to any one of claims 1 to 13, further comprising:

a protective layer forming step of forming a protective layer, using a composition containing a polymer component, on a principal surface of the metal foil opposite to the surface on which the resin layer is formed before the through-hole forming step,
wherein in the resin layer removing step, the resin layer and the protective layer are removed to produce a perforated metal foil having through-holes.

FIG. 1A

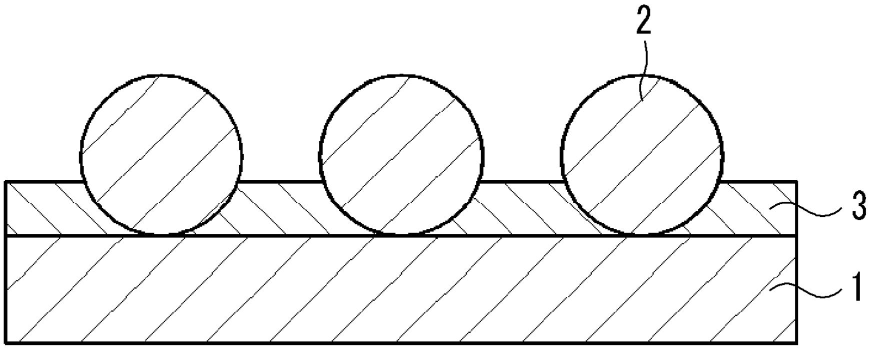


FIG. 1B

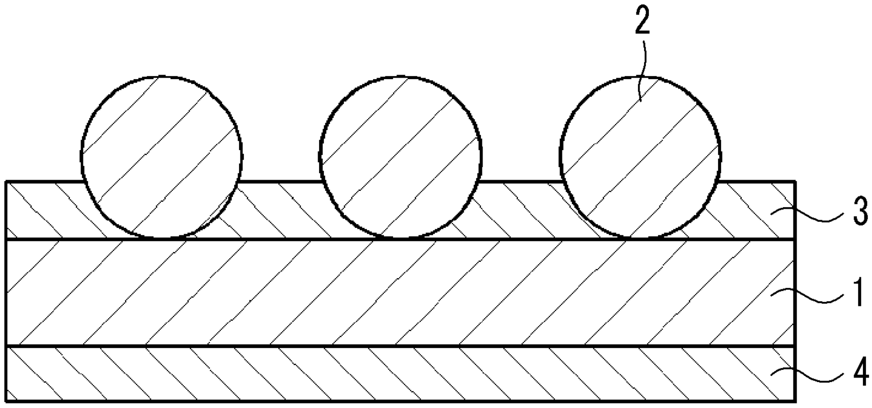


FIG. 1C

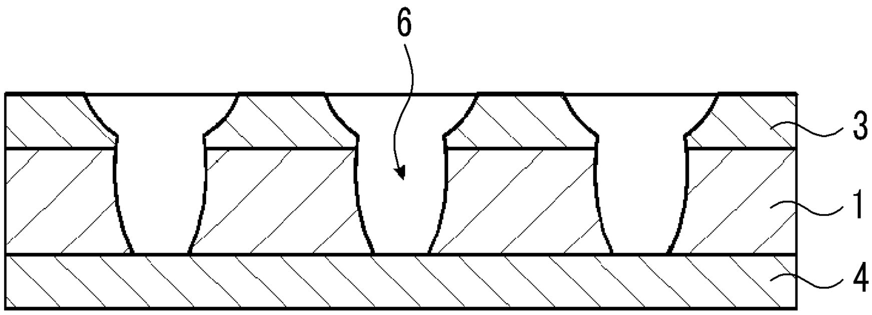


FIG. 1D

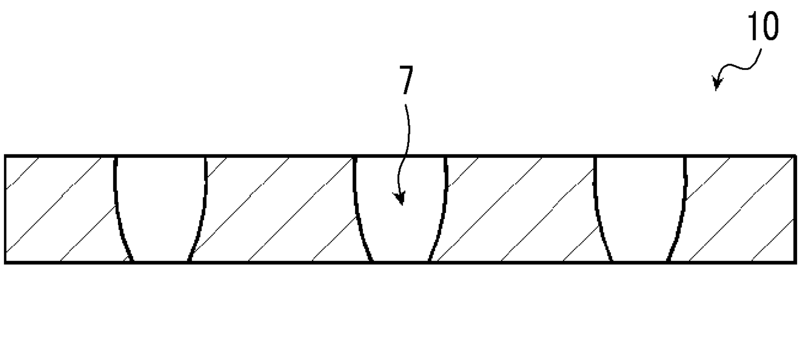

FIG. 2A

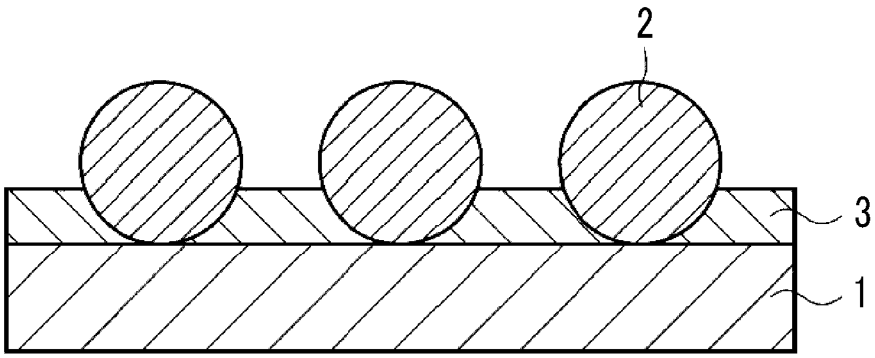


FIG. 2B

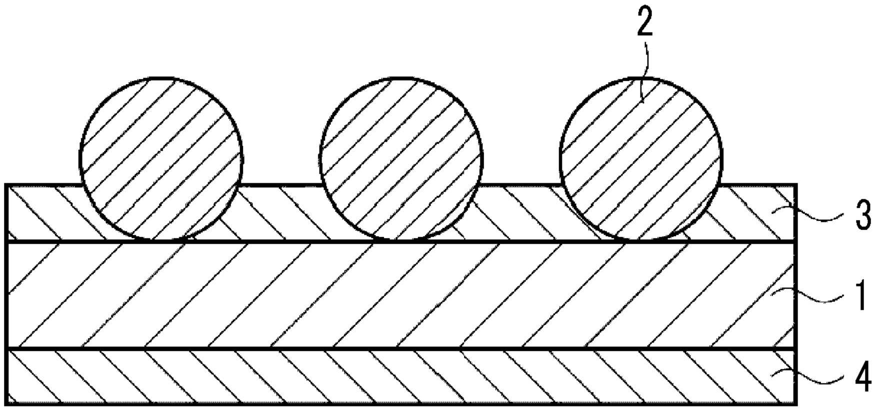


FIG. 2C

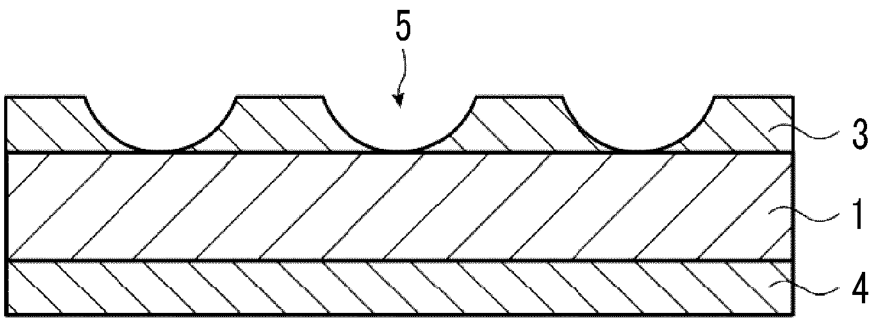

FIG. 2D

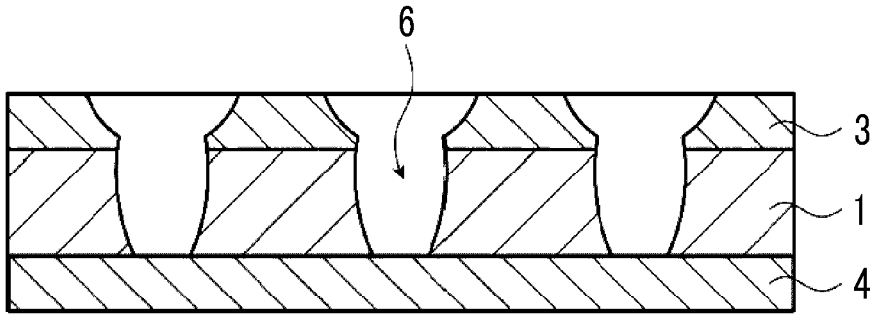


FIG. 2E

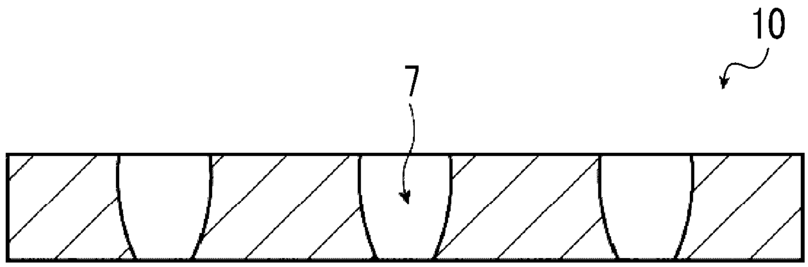

**INTERNATIONAL SEARCH REPORT**

International application No.
PCT/JP2017/030136

A. CLASSIFICATION OF SUBJECT MATTER
*C23F1/02*(2006.01)i, *C23F1/00*(2006.01)i, *H01G11/70*(2013.01)i, *H01G11/84*(2013.01)i, *H01M4/66*(2006.01)i

According to International Patent Classification (IPC) or to both national classification and IPC

B. FIELDS SEARCHED

Minimum documentation searched (classification system followed by classification symbols)
C23F1/02, C23F1/00, H01G11/70, H01G11/84, H01M4/66

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2015-113483 A (Dainippon Printing Co., Ltd.),<br>22 June 2015 (22.06.2015),<br>paragraphs [0012], [0021] to [0026]; fig. 4, 5<br>(Family: none) | 1-5,7-14<br>6 |
| Y<br>A | JP 4-99288 A (Hitachi Cable Ltd.),<br>31 March 1992 (31.03.1992),<br>page 2, lower left column, line 7 to page 3, upper left column, line 2; page 3, lower right column, line 4 to page 4, lower left column, line 6; fig. 1 to 4<br>(Family: none) | 1-5,7-14<br>6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 September 2017 (13.09.17) | 26 September 2017 (26.09.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/030136

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-341559 A (Toshiba Corp.), 27 November 2002 (27.11.2002), entire text; fig. 1 to 3 (Family: none) | 1-14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11067217 A
- JP H11067217 A
- JP 62251740 A
- JP S62251740 A
- JP 3208514 A
- JP H3208514 A
- JP 59121044 A
- JP S59121044 A
- JP 4013149 A
- JP H4013149 A
- JP 2012216513 A